# FASCICULE DE BREVET EUROPEEN

(11) **EP 0 636 717 B1**
(45) Date de publication et mention de la délivrance du brevet: **29.04.1998**
(21) Numéro de dépôt: 94111512.3
(22) Date de dépôt: 23.07.1994
(51) Int. Cl.: D01G 15/46, D01G 13/00, D01G 21/00

(54) **Procédé de réalisation d'un ruban composé de fibres minérales et de fibres organiques et ruban ainsi réalisé**
Herstellungsverfahren eines aus mineral- und organischen Fasern zusammensetzten Bandes und das erhaltene Band
Production method of a sliver composed of mineral and organic fibers and the obtained sliver

(30) Priorité: 29.07.1993 FR 9309351
(43) Date de publication de la demande: 01.02.1995
(73) Titulaire: VALEO, 75017 Paris (FR)
(72) Inventeur: Lignereux, Pierre, F-61100 Flers (FR); Legrand, Claude, F-14110 Conde Noireau (FR); Crave, Yves, F-61100 St. Georges (FR); Guerin, Richard, F-61100 Flers-de-l'Orne (FR)
(74) Mandataire: Lemaire, Marc

(56) Documents cités:
- EP-A- 0 329 255
- DE-A- 4 130 809
- DE-U- 8 705 740
- US-A- 4 197 223
- US-A- 4 979 270

## Description

La présente invention a pour objet un procédé de réalisation d'un ruban composé de fibres minérales et de fibres organiques et ruban ainsi réalisé.

Elle s'applique plus particulièrement à la réalisation de rubans composites à base de fibres de verre destinés à la fabrication de fils eux-mêmes utilisés dans la fabrication de disques de friction d'embrayages.

Un procédé connu de réalisation d'un ruban, mis en oeuvre par la demanderesse, selon les enseignements du document FR-B-2 497 239, consiste à utiliser des fibres organiques et des fibres minérales telles que des fibres de verre, ces dernières se présentant généralement sous forme de mèches multifilaments ("rovings"), et à réaliser les opérations suivantes :
- ouverture des fibres organiques par un procédé textile classique, mécaniquement ou pneumatiquement ;
- en parallèle, coupe et défibrillisation de mèches ("rovings") de fibres minérales ;
- mélange des fibres organiques et des fibres minérales ;
- cardage du mélange ;
- passage du voile de carde ainsi obtenu dans un condenseur, de manière à réaliser un ruban ;
- empotage du ruban.

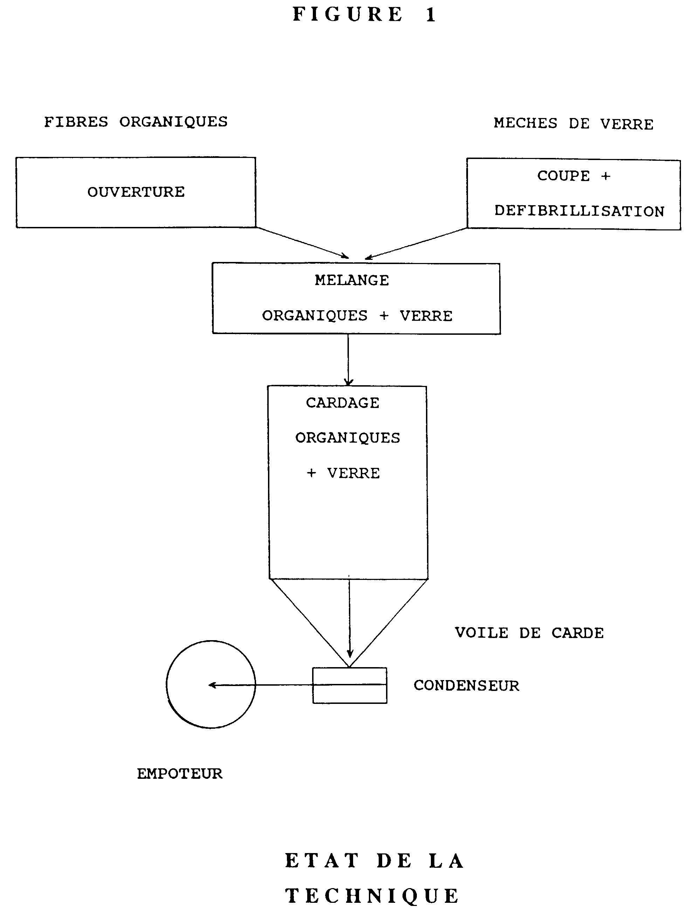

Ces diverses opérations sont schématisées sur la figure 1 annexée.

Un tel procédé présente divers inconvénients.

Le cardage de fibres minérales telles que des fibres de verre produit des poussières nocives pour les opérateurs et pour les machines.

En outre, ces poussières de fibres minérales ne sont pas récupérables et doivent être mises au rebut.

L'invention a pour but de pallier ces inconvénients précités de la technique antérieure.

Le procédé de réalisation d'un ruban composé de fibres minérales et de fibres organiques est caractérisé en ce qu'il consiste à introduire dans un condenseur, d'une part, un voile de carde composé essentiellement de fibres organiques et, d'autre part, des mèches de fibres minérales.

Ainsi, seules les fibres organiques subissent une opération de cardage.

Selon un point complémentaire de l'invention, les mèches de fibres minérales subissent, préalablement à leur introduction dans ledit condenseur, une opération de défibrillisation ou voluminisation telle qu'au moyen d'un jet d'air.

Mais, selon un autre aspect de l'invention, l'opération de défibrillisation ou voluminisation est réalisée en soumettant lesdites mèches à des vibrations à fréquence et intensité appropriées.

Grâce aux dispositions selon l'invention, l'émission de poussières de verre ou similaire est considérablement limitée et les rebuts sont pratiquement inexistants.

A cet égard il convient de noter que les résidus provenant du cardage des fibres organiques sont facilement recyclables.

Outre l'amélioration des conditions d'hygiène, le procédé, selon l'invention, permet une plus grande rapidité d'exécution.

La durée de vie des machines est par ailleurs augmentée en raison d'une moindre usure.

Le ruban réalisé conformément au procédé selon l'invention, présente des caractéristiques améliorées, en particulier pour son application à la réalisation d'un fil destiné à la fabrication de garnitures de frottement d'embrayages ou similaires.

Ces dernières présentent, grâce à l'invention, des caractéristiques améliorées, notamment en ce qui concerne leur cohérence et leur résistance aux efforts de centrifugation.

Ceci est dû à la capacité d'imprégnation améliorée d'un fil réalisé à partir d'un ruban selon l'invention.

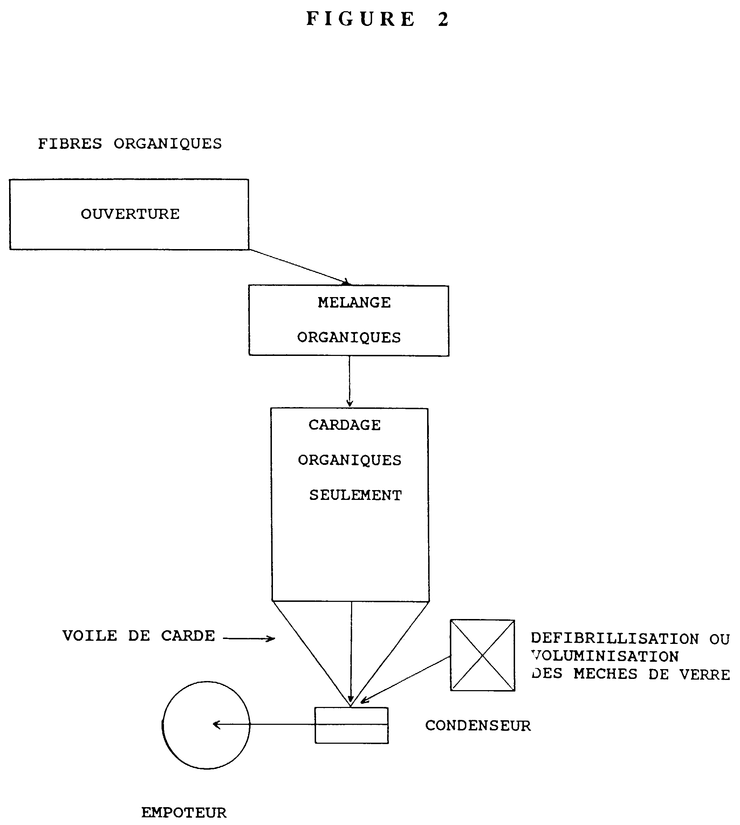

D'autres caractéristiques et avantages de l'invention apparaîtront à la lecture d'un exemple de réalisation de l'invention en référence aux dessins annexés sur lesquels, outre la figure 1 précitée, la figure 2 illustre schématiquement le déroulement du procédé selon l'invention.

On procède tout d'abord à l'ouverture d'un mélange de fibres organiques mécaniquement et pneumatiquement par un procédé habituel.

Ce mélange est composé de fibres de viscose (0 à 50 % en poids) et de fibres acryliques (10 à 100 % en poids).

Les fibres organiques sont ensuite cardées sur une carde de type "laine" ou de type "coton".

Des mèches de fibres de verre sont défibrillisées ou voluminisées par vibraformage, c'est-à-dire en les soumettant à l'effet de vibrations de fréquence et d'intensité appropriées, au moyen de rideaux vibrants.

Les fibres de verre présentes dans lesdites mèches comprennent des multi-filaments continus de diamètre sensiblement identique et compris entre 3 et 20 µm.

Chaque filament de verre est de type textile ou plastique ou textilo-plastique, avec un taux d'ensimage compris entre 0,2 et 5 %.

Le voile de carde formé de fibres organiques, comme indiqué ci-dessus, ainsi que les mèches de fibres minérales défibrillisées ou voluminisées sont introduits dans un condenseur.

Les mèches de fibres de verre représentent de 10 à 90 % en poids de l'ensemble voile de carde/mèches introduit dans le condenseur.

Une coupe des mèches de fibres minérales est effectuée dans le condenseur.

Le condenseur est composé de deux parties.

Une première partie comporte deux galets métalliques en vis-à-vis, l'un à gorge et l'autre à épaulement.

Une deuxième partie comprend deux cylindres, l'un garni de caoutchouc lisse, l'autre métallique et cannelé.

La transformation, dans le condenseur, des fibres minérales continues ou fibres discontinues (encore appelées "staple fibers") est réalisée en faisant varier l'écartement des deux galets et la vitesse des deux cylindres.

En sortie de condenseur un ruban empoté.

Le ruban peut ensuite être transformé en fil par une des méthodes usuelles de l'industrie textile.

## Revendications

1. Procédé de réalisation d'un ruban composé de fibres minérales et de fibres organiques, caractérisé en ce qu'il consiste à introduire dans un condenseur, d'une part, un voile de carde composé essentiellement de fibres organiques et, d'autre part, des mèches de fibres minérales.

2. Procédé de réalisation d'un ruban composé de fibres minérales et de fibres organiques selon la revendication 1, caractérisé en ce que les mèches de fibres minérales subissent, préalablement à leur introduction dans ledit condenseur, une opération de défibrillisation ou voluminisation.

3. Procédé de réalisation d'un ruban composé de fibres minérales et de fibres organiques selon la revendication 2, caractérisé en ce que l'opération de défibrillisation ou voluminisation est réalisée en soumettant lesdites mèches à des vibrations à fréquence et intensité appropriées.

4. Procédé de réalisation d'un ruban composé de fibres minérales et de fibres organiques selon la revendication 3, caractérisé en ce que ladite opération de défibrillisation ou voluminisation est réalisée au moyen de rideaux vibrants.

5. Procédé de réalisation d'un ruban composé de fibres minérales et de fibres organiques selon l'une quelconque des revendications précédentes, caractérisé en ce qu'une coupe des mèches de fibres minérales est effectuée dans le condenseur.

6. Ruban composé de fibres minérales et de fibres organiques réalisé par un procédé selon l'une quelconque des revendications précédentes, caractérisé en ce que lesdites fibres organiques comprennent de 0 à 50 % en poids de fibres de viscose et de 50 à 100 % en poids de fibres acryliques.

7. Ruban selon la revendication 6 caractérisé en ce que lesdites fibres de verre comprennent des multi-filaments de diamètre compris entre 3 et 20 µm.

## Patentansprüche

1. Verfahren zur Herstellung eines aus Mineralfasern und organischen Fasern zusammengesetzten Bands, **dadurch gekennzeichnet**, daß es darin besteht, in einen Verdichter einerseits einen im wesentlichen aus organischen Fasern zusammengesetzten Kardenflor und andererseits Mineralfaserstränge einzuführen.

2. Verfahren zur Herstellung eines aus Mineralfasern und organischen Fasern zusammengesetzten Bands nach Anspruch 1 , **dadurch gekennzeichnet,** daß die Mineralfaserstränge vor ihrer Einführung in den besagten Verdichter einem Fibrillierungs- oder Voluminisierungsvorgang unterzogen werden.

3. Verfahren zur Herstellung eines aus Mineralfasern und organischen Fasern zusammengesetzten Bands nach Anspruch 2 , **dadurch gekennzeichnet**, daß der Fibrillierungs- oder Voluminisierungsvorgang dadurch erfolgt, daß die besagten Stränge Vibrationen mit geeigneter Frequenz und Intensität ausgesetzt werden.

4. Verfahren zur Herstellung eines aus Mineralfasern und organischen Fasern zusammengesetzten Bands nach Anspruch 3 , **dadurch gekennzeichnet**, daß der besagte Fibrillierungs- oder Voluminisierungsvorgang anhand von Rüttelwänden erfolgen.

5. Verfahren zur Herstellung eines aus Mineralfasern und organischen Fasern zusammengesetzten Bands nach einem der vorangehenden Ansprüche , **dadurch gekennzeichnet**, daß im Verdichter ein Schnitt der Mineralfaserstränge erfolgt.

6. Aus Mineralfasern und organischen Fasern zusammengesetztes Band, das durch ein Verfahren nach einem der vorangehenden Ansprüche hergestellt wird , **dadurch gekennzeichnet,** daß die besagten organischen Fasern 0 bis 50 Gewichtsprozent Viskosefasern und 50 bis 100 Gewichtsprozent Acrylfasern enthalten.

7. Band nach Anspruch 6 , **dadurch gekennzeichnet,** daß die besagten Glasfasern Multifilamente mit einem Durchmesser zwischen 3 und 20 µm enthalten.

## Claims

1. A method of making a web or sliver consisting of mineral fibres and organic fibres, characterised in that it comprises introducing into a condenser, firstly a carded mat consisting essentially of organic fibres, and secondly, mineral fibre rovings.

2. A method of making a web or sliver consisting of mineral fibres and organic fibres according to Claim 1, characterised in that the mineral fibre rovings undergo, before their introduction into the said condenser, an operation of defibrillation or bulking.

3. A method of making a web or sliver consisting of mineral fibres and organic fibres according to Claim 2, characterised in that the operation of defibrillation or bulking is carried out by subjecting the said rovings to vibrations in an appropriate frequency and intensity.

4. A method of making a web or sliver consisting of mineral fibres and organic fibres according to Claim 3, characterised in that the said operation of defibrillation or bulking is performed by means of vibrating curtains.

5. A method of making a web or sliver consisting of mineral fibres and organic fibres according to any one of the preceding Claims, characterised in that an operation of cutting the mineral fibre rovings is carried out in the condenser.

6. A web or sliver consisting of mineral fibres and organic fibres, made by a method according to any one of the preceding Claims, characterised in that the said organic fibres comprise from 0 to 50% by weight of viscose fibres and 50 to 100% by weight of acrylic fibres.

7. A web or sliver according to Claim 6, characterised in that the said glass fibres comprise multifilaments having a diameter in the range between 3 and 20 µm.
